# EUROPÄISCHE PATENTSCHRIFT

(11) **EP 1 562 807 B1**
(45) Veröffentlichungstag und Bekanntmachung des Hinweises auf die Patenterteilung: **01.06.2011**
(21) Anmeldenummer: 03767403.3
(22) Anmeldetag: 06.11.2003
(51) Int. Cl.: B60T 8/1755, B60T 8/172, H04N 13/00, G01S 5/16

(54) **FAHRDYNAMIKREGELUNG MIT BILDSENSORSYSTEM**
VEHICLE DYNAMIC CONTROL WITH IMAGE SENSOR SYSTEM
REGULATION DU COMPORTEMENT DYNAMIQUE DE ROULEMENT FAISANT APPEL A UN SYSTEME CAPTEUR D'IMAGES

(30) Priorität: 08.11.2002 DE 10251949
(43) Veröffentlichungstag der Anmeldung: 17.08.2005
(73) Patentinhaber: ROBERT BOSCH GMBH, 70442 Stuttgart (DE)
(72) Erfinder: MATTES, Bernhard, 74343 Sachsenheim (DE); HERRMANN, Thomas, 74613 Oehringen (DE)
(86) Internationale Anmeldenummer: PCT/DE2003/003690
(87) Internationale Veröffentlichungsnummer: WO 2004/041611

(56) Entgegenhaltungen:
- EP-A- 0 896 267
- EP-A- 0 945 319
- EP-A- 1 089 231
- PATENT ABSTRACTS OF JAPAN Bd. 0174, Nr. 12 (P-1583), 30. Juli 1993 (1993-07-30) & JP 5 079850 A (HITACHI LTD; others: 01), 30. März 1993 (1993-03-30)
- LEUNG M K ET AL: "ESTIMATING THREE-DIMENSIONAL VEHICLE MOTION IN AN OUTDOOR SCENE USING STEREO IMAGE SEQUENCES" INTERNATIONAL JOURNAL OF IMAGING SYSTEMS AND TECHNOLOGY, WILEY AND SONS, NEW YORK, US, Bd. 4, Nr. 2, 1. Juli 1992 (1992-07-01), Seiten 80-97, XP000288827 ISSN: 0899-9457

## Beschreibung

### Stand der Technik

Die Erfindung betrifft ein Verfahren und eine Vorrichtung zur Fahrdynamikregelung in einem Kraftfahrzeug mit wenigstens einem Bildsensorsystem, bestehend aus wenigstens zwei Bildsensoren, die im wesentlichen dieselbe Szene aufnehmen.

Vorrichtungen und Verfahren zur Fahrdynamikregelung in einem Kraftfahrzeug sind bekannt. Beispielsweise ist in Zanten, Erhardt, Pfaff: "VDC, The Vehicle Dynamics Control System of Bosch", Konferenz-Einzelbericht, Vortrag: International Congress and Exposition, 27.2. - 2.3.1995, Detroit, Michigan, SAE-Paper 950759, 1995 eine Vorrichtung und ein Verfahren zur Fahrdynamikregelung in einem Kraftfahrzeug beschrieben. Die Fahrdynamikregelung ist ein System, um das Kraftfahrzeug stabil und in der Spur zu halten. Dies wird durch gezieltes Bremsen einzelner Räder des Kraftfahrzeuges erreicht. Dazu wird mittels Sensoren der Fahrerwunsch, also das Sollverhalten des Kraftfahrzeuges, und das Fahrzeugverhalten, also das Istverhalten des Kraftfahrzeuges, ermittelt. In einer Verarbeitungseinheit/Steuereinheit wird der Unterschied zwischen dem Sollverhalten und dem Istverhalten als Regelabweichung ermittelt und die einzelnen Aktoren, beispielsweise die Radbremsen, mit dem Ziel der Minimierung der Regelabweichung gesteuert. Als Sensoren werden insbesondere Giergeschwindigkeitssensoren, Querbeschleunigungssensoren, Lenkradwinkelsensoren, Vordrucksensoren und Drehzahlsensoren verwendet. Hinweise auf die Verwendung wenigstens eines Bildsensorsystems bestehend aus wenigstens zwei Bildsensoren, die im wesentlichen dieselbe Szene aufnehmen, fehlen hier.

Aus der japanischen Offenlegungsschrift JP 05079850 ist bekannt, die Gierrate eines Kraftfahrzeuges mittels zweier Kameras zu bestimmen. Die europäische Patentanmeldung EP 1 089 231 A2 offenbart eine Vorrichtung zur Erkennung von Straßenmarkierungen auf der Straßenoberfläche basierend auf Stereobildpaaren einer Stereokamera. Aus der europäischen Patentanmeldung EP 0 896 267 A2 ist ein System zur Positionserkennung eines Kraftfahrzeuges bekannt, wobei das System eine Stereokamera umfasst.

### Vorteile der Erfindung

Das nachfolgend beschriebene Verfahren und die Vorrichtung zur Fahrdynamikregelung in einem Kraftfahrzeug mit wenigstens einem Bildsensorsystem, wobei wenigstens zwei Bildsensoren vorgesehen sind, die im wesentlichen dieselbe Szene aufnehmen, haben den Vorteil, dass Bildsensorsysteme in Kraftfahrzeugen für den Einsatz in weitere Funktionen vorgesehen sind. Besonders vorteilhaft sind Stereokameras. Bildsensorsysteme und Stereokameras können beispielsweise als Bestandteil einer automatischen Geschwindigkeitsregelung und/oder Abstandsregelung, beispielsweise im System des Adaptive Cruise Control (ACC), in einem Kraftfahrzeug eingesetzt werden. Weitere Anwendungsmöglichkeiten von Außen-Videokamera-Systemen werden z.B. sein: Precrashsensensierung, Fußgängererkennung, Überrollerkennung. Die Verwendung desselben Bildsensorsystems für mehrere Funktionen führt zu einer Reduzierung der Kosten für solche Systeme, weil die Kosten pro Funktion gesenkt werden. Besonders vorteilhaft ist der Anschluss des Bildsensorsystems und/oder der Stereokamera an eine Sensorplattform, bei der verschiedene Sensoren an einem Datenbus angeschlossen sind und von verschiedenen Steuergeräten synergetisch genutzt werden. Dies führt zu einer weiteren Senkung der Kosten pro Funktion. Damit wird eine weite Verbreitung der beschriebenen Funktionen in Kraftfahrzeugen ermöglicht. Speziell eine weite Verbreitung der Fahrdynamikregelung in Kraftfahrzeugen, die sich im Verkehrsraum befinden, führt insgesamt zu einer Erhöhung der Verkehrssicherheit.

Erfindungsgemäß erfolgt die Bestimmung wenigstens eines Messwertes aus den erzeugten Bildinformationen, wobei der Messwert zur Fahrdynamikregelung verwendet wird. Durch die Bestimmung des wenigstens einen Messwertes, wird eine einfache Anbindung des Bildsensorsystems an die Fahrdynamikregelung ermöglicht, da ein definierter Messwert für die Fahrdynamikregelung zur Verfügung steht. Dies ermöglicht eine einfache Adaptation eines Bildsensorsystems an die Fahrdynamikregelung, da die spezifischen Eigenschaften des Bildsensorsystems, wie räumliche Auflösung und/oder Grauwertauflösung und/oder Farbauflösung und/oder Abtastfrequenz, nicht in die Fahrdynamikregelung eingehen.

Erfindungsgemäß führt die Bestimmung wenigstens eines ortsfesten Bildpunktes , indem zwischen beweglichen und ortsfesten Bildpunkten unterschieden wird, und die anschließende Ermittlung der Bildkoordinaten des Bildpunktes in wenigstens zwei Bildern einer Bildsequenz zu einer schnellen und fehlertoleranten Bestimmung wenigstens eines Messwertes zur Fahrdynamikregelung aus den erzeugten Bildinformationen des Bildsensorsystems.

Vorteilhaft ist die Bestimmung wenigstens eines Rotationsvektors des Kraftfahrzeuges und/oder wenigstens eines Bewegungsvektors des Kraftfahrzeuges aus den erzeugten Bildinformationen. Neben der Bestimmung der Giergeschwindigkeit und/oder des Gierwinkels und/oder der Querbeschleunigung ist die alternative oder zusätzliche Bestimmung von weiteren Bewegungsvektoren in den drei Hauptachsen des Kraftfahrzeuges und/oder von weiteren Rotationsvektoren um dieselben besonders vorteilhaft. Die Bestimmung der Wankbeschleunigung und/oder der Wankgeschwindigkeit und/oder des Wankwinkels ermöglicht in vorteilhafter Weise die Erkennung und Vermeidung eines seitlichen Überrollens des Kraftfahrzeuges. Durch geeignete Steuerung von Aktoren, beispielsweise von einzelnen Radbremsen im Rahmen der Fahrdynamikregelung, kann damit ein seitlicher Überschlag des Kraftfahrzeuges verhindert werden. Bei Kraftfahrzeugen mit hohem Schwerpunkt, beispielsweise Kleintransportern, führt diese Funktion in vorteilhafter Weise zu einer Erhöhung der Verkehrssicherheit. Durch die Bestimmung der Nickbeschleunigung und/oder der Nickgeschwindigkeit und/oder des Nickwinkels werden Gefahren erkannt, die aus einer zu starken Nickbewegung des Kraftfahrzeugs entstehen. Im Rahmen der Fahrdynamikregelung wird beispielsweise ein Kippen des Kraftfahrzeuges über die Hinterachse durch geeignete Steuerung von Aktoren, beispielsweise von einzelnen Radbremsen, verhindert. Bei Fahrzeugen mit kurzen Radständen, beispielsweise zweisitzigen Kraftfahrzeuge für den Stadtverkehr, führt diese Funktion zu einer Erhöhung der Verkehrssicherheit. Vorteilhaft ist die Bestimmung von allen drei Bewegungsvektoren in den drei Hauptachsen des Kraftfahrzeuges und von den zugehörigen Rotationsvektoren um dieselben. Dies ermöglicht die dreidimensionale Erkennung der Fahrzeugbewegung. Während herkömmliche Fahrdynamikregelungen die Giergeschwindigkeit und die Querbeschleunigung zur Modellierung der Fahrzeugbewegung verwenden, ermöglicht das nachfolgend beschriebene Verfahren, die Vorrichtung und die Verarbeitungseinheit/Steuereinheit die dreidimensionale Modellierung der Fahrzeugbewegung. Diese zusätzlichen Informationen führen zu einer vorteilhaften Verbesserung der Fahrdynamikregelung, da die dreidimensionale Fahrzeugbewegung zuverlässig und vollständig erfasst wird.

Die Bestimmung der Giergeschwindigkeit und/oder des Gierwinkels und/oder der Querbeschleunigung des Kraftfahrzeuges aus den erzeugten Bildinformationen ermöglicht die Verwendung des Bildsensorsystems als Giergeschwindigkeitssensor und/oder als Querbeschleunigungssensor zur Fahrdynamikregelung. Dies führt in vorteilhafter Weise zu einer Kostenverminderung, weil das Bildsensorsystem alternativ oder gleichzeitig die Funktion des Giergeschwindigkeitssensors oder des Querbeschleunigungssensors übernimmt. Durch die vielfältige Verwendung des Bildsensorsystems für mehrere Funktionen werden die Kosten pro Punktion in vorteilhafter Weise gesenkt. Das Bildsensorsystem ermöglicht eine zuverlässige und schnelle Bestimmung der Giergeschwindigkeit und/oder des Gierwinkels und/oder der Querbeschleunigung des Kraftfahrzeuges.

Vorteilhaft ist die Bestimmung der dreidimensionalen Rotationsbewegung und/oder der dreidimensionalen Translationsbewegung des Kraftfahrzeuges in Abhängigkeit von Bildinformationen von wenigstens einem Bildsensorsystem, insbesondere einer Stereokamera, da hierdurch die Dynamik des Kraftfahrzeuges bodenkontaktunabhängig bestimmbar ist. Ferner ist vorteilhaft, dass neben wenigstens eines Bildsensorsystems in und/oder entgegen der Fahrtrichtung, wenigstens ein zweites Bildsensorsystem quer zur Fahrtrichtung angeordnet ist, da dies zu einer verbesserten dreidimensionalen Bestimmung der Bewegung des Kraftfahrzeuges beiträgt.

Besonders vorteilhaft ist, dass beim Verfahren zur Fahrdynamikreglung und/oder beim Verfahren zur Bestimmung der Bewegung eines Kraftfahrzeuges in Abhängigkeit der erzeugten Bildinformationen wenigstens ein ortsfester Bildpunkt bestimmt wird. Die Bestimmung eines Messwertes zur Fahrdynamikregelung und/oder die Bestimmung der dreidimensionalen Rotationsbewegung und/oder der dreidimensionalen Translationsbewegung in Abhängigkeit des bestimmten wenigstens einen ortsfesten Bildpunktes führt zu einer weiteren Verbesserung der vorgeschlagenen Verfahren und der entsprechenden Vorrichtungen.

In vorteilhafter Weise ermöglicht die Verwendung von mehr als einem Bildsensorsystem mit wenigstens zwei Bildsensoren, die im wesentlichen dieselbe Szene aufnehmen, die Ermittlung der Differenzen der beiden Ortsvektoren zum selben Bildpunkt und aus deren Änderung die Berechnung der räumlichen translatorischen und rotatorischen Bewegungsvektoren des Fahrzeugs.

Dabei werden die Messwerte durch wenigstens zwei Bildsensorsysteme unabhängig voneinander bestimmt.

Besonders vorteilhaft ist ein Computerprogramm mit Programmcode-Mitteln, um alle Schritte des nachfolgend beschriebenen Verfahrens durchzuführen, wenn das Programm auf einem Computer ausgeführt wird. Die Verwendung eines Computerprogramms ermöglicht die schnelle und kostengünstige Anpassung des Verfahrens, beispielsweise durch Anpassung von Parametern an den jeweiligen Fahrzeugtyp und/oder Komponenten der Fahrdynamikregelung. Daneben wird die Wartung in vorteilhafter Weise verbessert, da die einzelnen Verfahrensschritte nicht in Hardware, sondern in Software realisiert sind.

Vorteilhaft ist eine Sensoreinheit mit wenigstens einem Bildsensorsystem, wobei Mittel zur Bestimmung wenigstens eines Rotationsvektors und/oder wenigstens eines Translations-Bewegungsvektors vorgesehen sind. Neben der Verwendung der Sensoreinheit in Fahrdynamikregelungen kann die Sensoreinheit in vorteilhafter Weise außerhalb der Kraftfahrzeugtechnik eingesetzt werden. Der Einsatzbereich der Sensoreinheit erstreckt sich dabei auf Anwendungsbereiche, wo wenigstens ein Rotationsvektor und/oder wenigstens ein Bewegungsvektor eines bewegten und/oder beschleunigten Objektes benötigt wird. Durch Anbringen der Sensoreinheit an dem Objekt werden die benötigten Vektoren aus den Bildinformationen der Umgebung gewonnen. Damit ist diese Sensoreinheit bei entsprechendem Einbau in ein Kraftfahrzeug in vorteilhafter Weise zur Bestimmung der Giergeschwindigkeit und/oder des Gierwinkels und/oder der Querbeschleunigung des Kraftfahrzeuges geeignet. Diese Sensoreinheit kann damit als Sensor des nachfolgend beschriebenen Verfahrens und der nachfolgend beschriebenen Vorrichtung zur Fahrdynamikregelung eingesetzt werden.

Weitere Vorteile ergeben sich aus der nachfolgenden Beschreibung von Ausführungsbeispielen mit Bezug auf die Figuren und aus den abhängigen Patentansprüchen.

### Zeichnung

Die Erfindung wird nachstehend anhand der in der Zeichnung dargestellten Ausführungsformen näher erläutert.

Es zeigen:
- Figur 1: ein Blockdiagramm der Fahrdynamikregelung in einem Kraftfahrzeug im bevorzugten Ausführungsbeispiel,
- Figur 2: eine Übersichtszeichnung der Fahrdynamikregelung in einem Kraftfahrzeug im bevorzugten Ausführungsbeispiel,
- Figur 3: eine Zeichnung der Anordnung der Komponenten der Fahrdynamikregelung in einem Kraftfahrzeug im bevorzugten Ausführungsbeispiel,
- Figur 4: ein Kraftfahrzeug mit einer Stereokamera im bevorzugten Ausfiihrungsbeispiel,
- Figur 5: ein Ablaufdiagramm des Verfahrens zur Fahrdynamikregelung in einem Kraftfahrzeug im bevorzugten Ausführungsbeispiel,
- Figur 6: eine Sensoreinheit,
- Figur 7: ein Kraftfahrzeug eines weiteren Ausführungsbeispiels in Aufsicht,
- Figur 8: ein Kraftfahrzeug eines weiteren Ausführungsbeispiels in Seitenansicht.

### Beschreibung von Ausführungsbeispielen

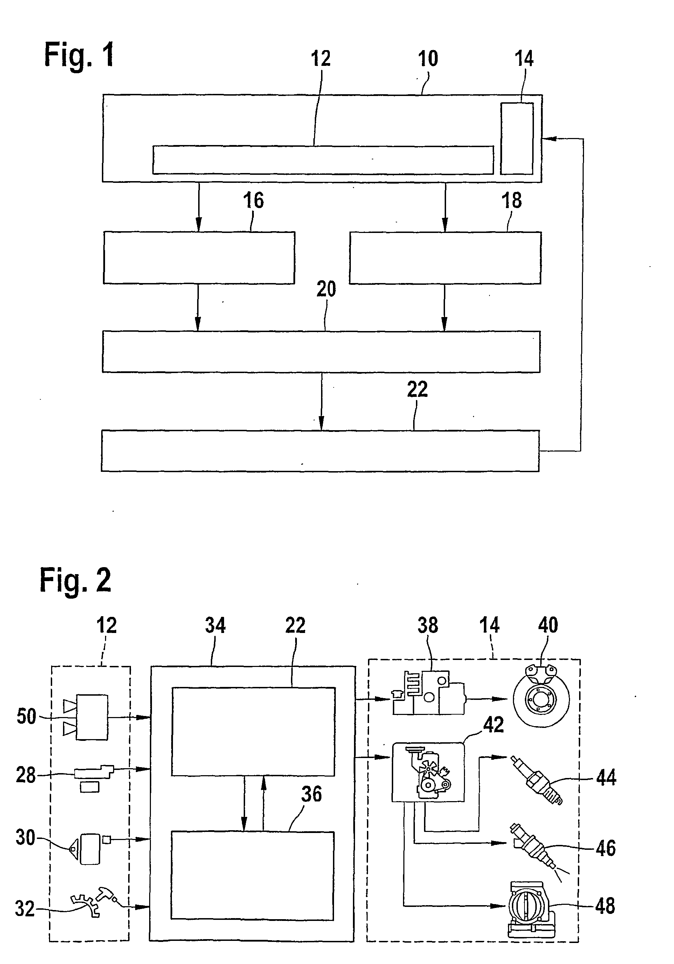

Figur 1 zeigt ein Blockdiagramm der Fahrdynamikregelung in einem Kraftfahrzeug 10 im bevorzugten Ausführungsbeispiel, bestehend aus Sensoren 12, Aktoren (Stellglieder) 14, dem Fahrerwunsch (Sollverhalten) 16, dem Fahrzeugverhalten (Istverhalten) 18, der Regelabweichung 20 und dem Fahrdynamikregler 22. Die Fahrdynamikregelung hat das Ziel, das Kraftfahrzeug 10 stabil und in der Spur zu halten. Durch Sensoren 12, die sich im Kraftfahrzeug 10 befinden, wird der Fahrerwunsch 16 ermittelt. Parallel wird durch Sensoren 12 das Fahrzeugverhalten 18 ermittelt. Aus dem Fahrerwunsch 16 und dem Fahrzeugverhalten 18 wird die Regelabweichung 20 berechnet. Die Regelabweichung 20 dient als Eingangsgröße für den Fahrdynamikregler 22. Der Fahrdynamikregler 22 steuert die Aktoren (Stellglieder) 14 mit dem Ziel, die Regelabweichung 20 zu minimieren. Als Aktoren 14 werden insbesondere die Radbremsen und/oder der Motor des Kraftfahrzeuges 10 verwendet. Durch eine situationsabhängige Einstellung der Brems-und Antriebskräfte an den Rädern des Kraftfahrzeuges 10 ist das Kraftfahrzeug 10 individuell lenkbar und das gewünschte Fahrverhalten wird auch in kritischen Fahrsituationen erreicht. Die Fahrdynamikregelung vermindert damit die Gefahr einer Kollision, die Gefahr eines Überschlags und/oder die Gefahr, dass das Kraftfahrzeug 10 von der Fahrbahn abkommt.

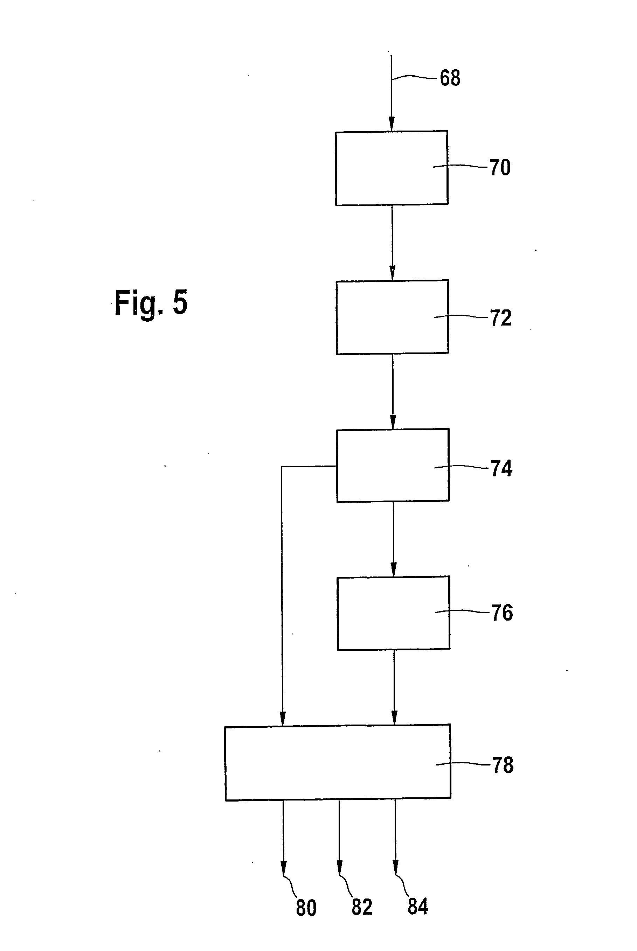

Figur 2 zeigt eine Übersichtszeichnung der Fahrdynamikregelung in einem Kraftfahrzeug im bevorzugten Ausführungsbeispiel, bestehend aus Sensoren 12, einer Verarbeitungseinheit/Steuereinheit 34 und Aktoren 14. Als Sensoren 12 werden eine Stereokamera 50, ein Lenkradwinkelsensor 28, ein Vordrucksensor 30 und Drehzahlsensoren 32 verwendet. Im bevorzugten Ausführungsbeispiel wird die Stereokamera 50 zur Bestimmung der Giergeschwindigkeit, des Gierwinkels und der Querbeschleunigung verwendet. Unter der Giergeschwindigkeit des Kraftfahrzeuges versteht man die Rotationsgeschwindigkeit des Kraftfahrzeuges durch eine Drehbewegung des Kraftfahrzeuges um seine Hochachse, während die Querbeschleunigung eines Kraftfahrzeuges die Beschleunigung senkrecht zur Fahrtrichtung und parallel zur Fahrbahn beschreibt. Der Gierwinkel ist der Drehwinkel des Kraftfahrzeuges um seine Hochachse bezüglich einer zeitlich zurückliegenden Position des Kraftfahrzeuges. Der Gierwinkel wird im bevorzugten Ausführungsbeispiel aus der Giergeschwindigkeit als akkumulierter Gierwinkel bestimmt. Der Lenkradwinkelsensor 28 erfasst den Lenkradwinkel des Kraftfahrzeuges. Der Vordrucksensor 30 ist im Bremssystem angeordnet und dient zur Erkennung der Betätigung der Bremse durch den Fahrer. Vier Drehzahlsensoren 32 sind jeweils mit einem Rad des Kraftfahrzeuges verbunden und werden zur Bestimmung der Drehgeschwindigkeit der Räder des Kraftfahrzeuges verwendet. Die Verarbeitungseinheit/Steuereinheit 34 verarbeitet die Informationen der Sensoren 12. Sie weist eine interne Reglerhierarchie auf. Dabei unterscheidet man zwischen dem überlagerten Fahrdynamikregler 22 und den unterlagerten Reglern 36. Als unterlagerte Regler 36 unterscheidet man im bevorzugten Ausführungsbeispiel zwischen dem Bremsschlupfregler, dem Antriebsschlupfregler und dem Motorschleppmomentregler. Zur Bestimmung des Fahrerwunsches werden Signale der Lenkradwinkelsensoren 28 und der Vordrucksensoren 30 ausgewertet. Zusätzlich gehen in die Berechnung des Fahrerwunsches die Haftreibwerte und die Fahrzeuggeschwindigkeit ein. Diese zusätzlich berechneten Parameter werden aus den Signalen der Drehzahlsensoren 32, der Stereokamera 50 und der Vordrucksensoren 30 geschätzt. Das Fahrzeugverhalten wird aus den Signalen der Stereokamera 50 und einem in der Verarbeitungseinheit/Steuereinheit 34 aus den Sensorsignalen geschätzten Schwimmwinkel des Kraftfahrzeuges ermittelt. Der Fahrdynamikregler 22 regelt die beiden Zustandsgrößen Giergeschwindigkeit und Schwimmwinkel des Kraftfahrzeuges. Als Aktoren 14 werden die Radbremsen 40 verwendet, die über das Hydroaggregat 38 angesteuert werden. Als weitere Aktoren 14 werden über das Steuergerät des Motormanagements 42 der Zündwinkel 44, die Kraftstoffeinspritzung 46 und die Drosselklappe 48 geregelt. Im bevorzugten Ausführungsbeispiel wird eine Stereokamera 50 verwendet, die aus zwei Bildsensoren besteht, die die selbe Szene abbilden, allerdings unter einem etwas unterschiedlichen Sichtwinkel. Als Bildsensoren werden CCD-Bildsensoren und/oder CMOS-Bildsensoren eingesetzt. Die Stereokamera 50 übermittelt Bildinformationen der Fahrzeugumgebung an die Verarbeitungseinheit/Steuereinheit 34. Die Bildinformationen der Stereokamera 50 werden elektrisch und/oder optisch an die Verarbeitungseinheit/Steuereinheit 34 über eine Signalleitung übertragen. Alternativ oder zusätzlich ist eine Übertragung der Bildinformationen per Funk möglich. Die Stereokamera 50 hat im bevorzugten Ausführungsbeispiel eine Reichweite von ca. 4 Meter bis 40 Meter, einen vertikalen Öffnungswinkel von etwa 17 Grad und eine Abtastrate von 10 Millisekunden. Die Verarbeitungseinheit/Steuereinheit 34 besteht aus mehreren in Figur 5 dargestellten Modulen, die im bevorzugten Ausführungsbeispiel als Programme wenigstens eines Mikroprozessors ausgestaltet sind. Durch die beschriebene Vorrichtung und das nachfolgend beschriebene Verfahren wird im bevorzugten Ausführungsbeispiel die Realisierung einer Fahrzeugstabilisierungszustandssensierung für die Verwendung zur Fahrdynamikregelung mit einer Stereokamera 50 ermöglicht.

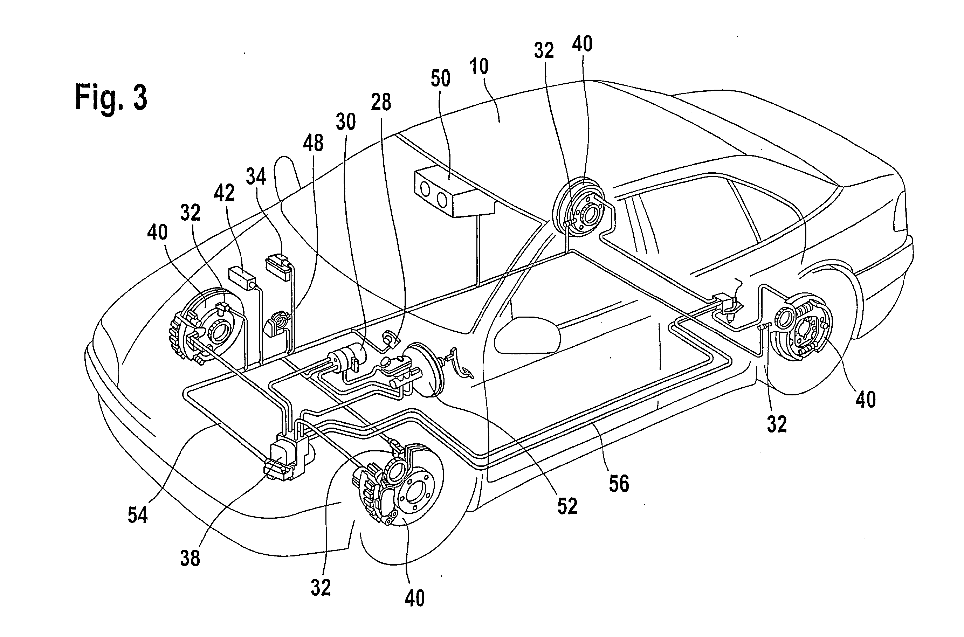

Figur 3 zeigt eine Zeichnung der Anordnung der Komponenten der Fahrdynamikregelung in einem Kraftfahrzeug 10 im bevorzugten Ausführungsbeispiel. Die Sensoren 28, 30, 32, 48, 50, die Aktoren 38, 42 und die Verarbeitungseinheit/Steuereinheit 34 sind im bevorzugten Ausführungsbeispiel über einen CAN-Bus 54 verbunden. Bei dem CAN-Bus 54 handelt es sich um einen Kommunikationsdatenbus. Als Sensoren werden der Lenkradwinkelsensor 28, der Vordrucksensor 30, die vier Drehzahlsensoren 32 und die Stereokamera 50 verwendet. Als Aktoren sind das Steuergerät des Motormanagements 42 mit der Drosselklappe 48 und das Hydroaggregat 38 eingezeichnet. Das Hydroaggregat 38 ist über Hydraulikleitungen 56 mit vier Radbremsen 40, und dem Bremskraftverstärker mit Hauptzylinder 52 verbunden.

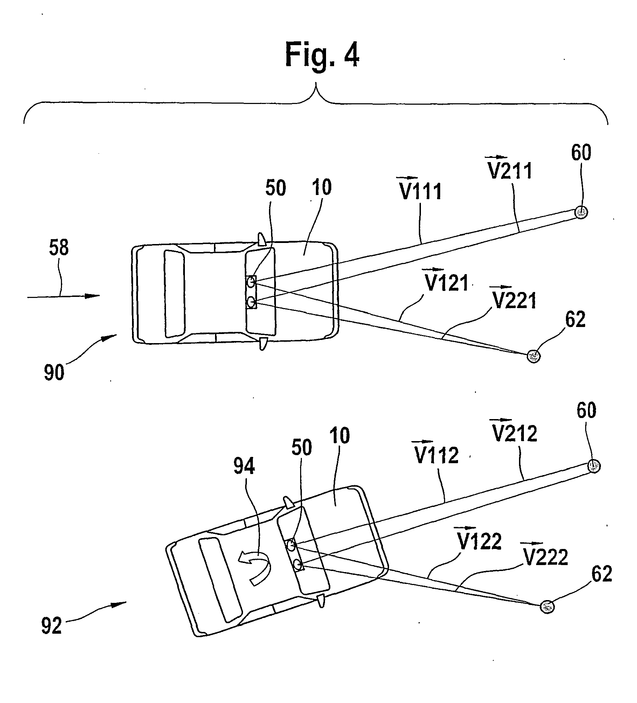

Figur 4 zeigt ein Kraftfahrzeug 10 mit einer Stereokamera 50 im bevorzugten Ausführungsbeispiel in einem ersten Betrachtungszeitpunkt 90 und einem zweiten Betrachtungszeitpunkt 92. Die Stereokamera 50 ist im Kraftfahrzeug 10 im Bereich des inneren Rückspiegels hinter der Windschutzscheibe angebracht. Die Blickrichtung der Stereokamera 50 ist in Fahrtrichtung 58 des Kraftfahrzeuges 10. Die Stereokamera 50 ermittelt dabei Bildinformationen der Kraftfahrzeugumgebung. In der Kraftfahrzeugumgebung ist ein erster ortsfester Bildpunkt 60 und ein zweiter ortsfester Bildpunkt 62 eingezeichnet. Ortsfeste Bildpunkte sind beispielsweise Fahrbahnmarkierungen und/oder Verkehrszeichen und/oder Pfähle und/oder Bäume und/oder Randpfosten und/oder Häuser. In beiden Betrachtungszeitpunkten 90, 92 sind die Vektoren V jeweils von der Bildsensorobjektivmitte der beiden Bildsensoren der Stereokamera 50 zu den beiden ortsfesten Bildpunkten 60, 62 eingezeichnet. Der erste Index des Vektors V bezeichnet dabei die Bildsensoren, während der zweite Index die Bildpunkte 60, 62 angibt. Der dritte Index gibt den Zeitpunkt des Vektors an. Damit bezeichnet beispielsweise V₂₁₂ den Vektor V vom zweiten Bildsensor zum ersten ortsfesten Bildpunkt 60 zum zweiten Betrachtungszeitpunkt 92. Eingezeichnet sind die Vektoren V₁₁₁, V₁₂₁, V₁₁₂, V₁₂₂, V₂₁₁, V₂₂₁, V₂₁₂ und V₂₂₂. Die X-Komponenten der Vektoren ändern sich bei einer Gierbewegung 94 des Kraftfahrzeuges 10 von einem ersten Betrachtungszeitpunkt 90 zu einem zweiten Betrachtungszeitpunkt 92. Hierbei geht man von zwei fahrzeugfesten karthesischen Koordinatensystemen aus. Die Nullpunkte der Koordinatensysteme liegen im bevorzugten Ausführungsbeispiel jeweils in Bildsensorobjektivmitte. Die Verarbeitungseinheit/Steuereinheit berechnet für die Fahrstabilitätserkennung synchron aus den Bildinformationen der beiden Bildsensoren der Stereokamera 50 die Vektoren zu einer Vielzahl von Bildpunkten 60, 62 und/oder einem Cluster von Pixeln. Dabei wird die vektorielle Veränderung zwischen den Einzelbildern betrachtet. Als Cluster von Pixeln werden beispielsweise hundert Pixel verwendet. Die Verwendung einer größeren und/oder kleineren Anzahl ist alternativ möglich. Ändern sich die X-Komponenten der Vektoren der beiden Bildsensoren 60, 62 der Stereokamera 50 von einem Abtastvorgang zum nächsten, also von einem ersten Betrachtungszeitpunkt 90 zu einem zweiten Betrachtungszeitpunkt 92, für gleiche Abscanpunkte zu stark, liegt ein instabiler Fahrzustand vor. Die Verarbeitungseinheit/Steuereinheit leitet die Rotationsinformation um die Z-Achse und/oder die Querbeschleunigung des Kraftfahrzeuges aus den Einzelbildervektoren ab und berechnet daraus die Giergeschwindigkeit und/oder den akkumulierten Gierwinkel und/oder die Querbeschleunigung.

Figur 5 zeigt ein Ablaufdiagramm des Verfahrens zur Fahrdynamikregelung in einem Kraftfahrzeug im bevorzugten Ausführungsbeispiel. Aus den Bildinformationen 68 der Stereokamera wird die Giergeschwindigkeit 80 und/oder der Gierwinkel 82 und/oder die Querbeschleunigung 84 bestimmt. Die Bildinformationen 68 werden dem Modul 70 zur Vorverarbeitung zugeleitet. Das Modul 70 wird insbesondere zur Verbesserung der Bildqualität und/oder zur Beseitigung von Störungen verwendet. In Modul 72 werden ortsfeste Bildpunkte bestimmt. Ortsfeste Bildpunkte sind beispielsweise Fahrbahnmarkierungen und/oder Verkehrszeichen und/oder Pfähle und/oder Bäume und/oder Randpfosten und/oder Häuser und/oder größere (≥ ca. 10 cm Durchmesser) Steine. Dies ist möglich mit Kameras mit 640x480 Pixeln entsprechend dem VGA-Standard (VGA = Video Graphics Array).

Eine Unterscheidung zu beweglichen Bildpunkten ist dadurch möglich, dass die Komponente der Abstandsänderung in Fahrzeuglängsrichtung zu diesen beweglichen Bildpunkten sich in erster Näherung mit anderer Geschwindigkeit als die Eigengeschwindigkeit des Kraftfahrzeugs ändert. Damit ist eine Unterscheidung zwischen beweglichen und ortsfesten Bildpunkten möglich. Bei Bewegungen von Bildpunkte senkrecht zur Fahrtrichtung des Kraftfahrzeuges, beispielsweise ein kreuzendes anderes Kraftfahrzeug, werden weitere Kriterien benötigt. Bei einem kreuzenden Kraftfahrzeug werden beispielsweise die Raddrehungen des kreuzenden Kraftfahrzeugs als Nicht-Berücksichtigungs-Kriterium verwendet und dadurch bewegliche Bildpunkte sicher erkannt. Als alternatives oder zusätzliches Kriterium ist ein ortsfester Bildpunkt jeder Bildpunkt, bei dem sich zwischen zwei Messzyklen die Bildkoordinaten des Bildpunktes nur so ändern, wie aufgrund der Fahrgeschwindigkeit und dem Kurvenradius des Kraftfahrzeuges abgeschätzt wird. Dabei können Messdaten weiterer Sensoren verwendet werden, wie Lenkwinkelsensoren oder Drehzahlsensoren. Die Bestimmung von ortsfesten Bildpunkten im Modul 72 basiert auf bekannten Methoden der Bildverarbeitung, insbesondere Bildsegmentierung, Merkmalsermittlung und Objekterkennung. Bei der Stereokamera lassen sich insbesondere durch das Verfahren der Triangulation die Bildkoordinaten bestimmen. Das Modul 74 dient zur Ermittlung von Bildkoordinaten der bestimmten ortsfesten Bildpunkte. Bei einem einzelnen Bildpunkt werden die Bildkoordinaten direkt bestimmt, während bei einem Cluster von Pixeln ein Schwerpunkt des Clusters ermittelt wird und daraus die Bildkoordinaten bestimmt werden. Ein ortsfester Bildpunkt ist demnach entweder durch einen einzelnen Punkt (Pixel) oder ein Cluster von Pixeln festgelegt. Die Bildkoordinaten der bestimmten ortsfesten Bildpunkte werden entweder im Modul 76 gespeichert und/oder zum Modul 78 zur Bestimmung der Ausgangswerte weitergeleitet. Durch Vergleich der gespeicherten Bildkoordinaten in Modul 76 der vorhergehenden Bilder und mit den Bildkoordinaten des aktuellen Bildes werden in Modul 78 die Bildvektöränderungen und daraus die Ausgangswerte die Giergeschwindigkeit 80 und/oder der Gierwinkel 82 und/oder die Querbeschleunigung 84 bestimmt.

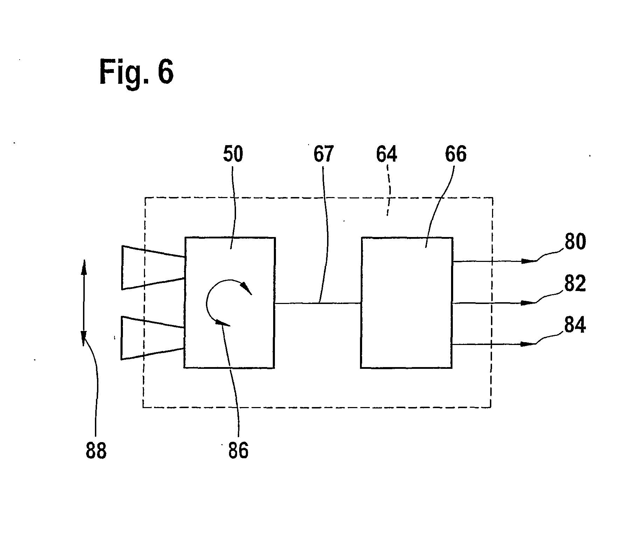

Figur 6 zeigt eine Sensoreinheit 64, bestehend aus einem Bildsensorsystem 50 und einem Verarbeitungsmittel 66. Das Bildsensorsystem besteht aus zwei Bildsensoren, die im wesentlichen die selbe Szene aufnehmen. Alternativ ist die Verwendung einer Stereokamera möglich. Als Bildsensoren sind beispielsweise CCD-Bildsensoren und/oder CMOS-Bildsensoren einsetzbar. Über die Signalleitung 67 werden die Bildinformationen vom Bildsensorsystem 50 an das Verarbeitungsmittel 66 übertragen. Die Übertragung erfolgt dabei elektrisch und/oder optisch. Alternativ oder zusätzlich ist eine Übertragung per Funk möglich. In diesem Ausführungsbeispiel werden entsprechend dem beschriebenen Verfahren in Figur 5 die Gierbewegung 86 und/oder die Querbewegung 88 ermittelt und als Ausgangswerte Giergeschwindigkeit 80 und/oder Gierwinkel 82 und/oder Querbeschleunigung 84 der Sensoreinheit 64 zur Verfügung gestellt. Das Verarbeitungsmittel 66 besteht aus mehreren in Figur 5 dargestellten Modulen, die in diesem Ausführungsbeispiel als Programme wenigstens eines Mikroprozessors ausgestaltet sind. In diesem Ausführungsbeispiel bildet das Bildsensorsystem 50 und das Verarbeitungsmittel 66 eine Einheit. Alternativ ist eine Trennung der Komponenten Bildsensorsystem 50 und Verarbeitungsmittel 66 möglich. In einer weiteren Ausführung der Sensoreinheit 64 sind weitere Mittel zur Bestimmung wenigstens eines weiteren Rotationsvektors und/oder wenigstens eines weiteren Bewegungsvektors vorgesehen. Durch die Verwendung weiterer Bildsensorsysteme wird in einer weiteren Variante eine Redundanz- und/oder eine Plausibilitätsfunktion ermöglicht. Das Einsatzgebiet der beschriebenen Sensoreinheit 64 ist nicht auf die Kraftfahrzeugtechnik beschränkt. Vielmehr ermöglicht die Sensoreinheit 64 die Bestimmung wenigstens eines Rotationsvektors und/oder die Bestimmung wenigstens eines Bewegungsvektors allgemein bezüglich der Sensoreinheit.

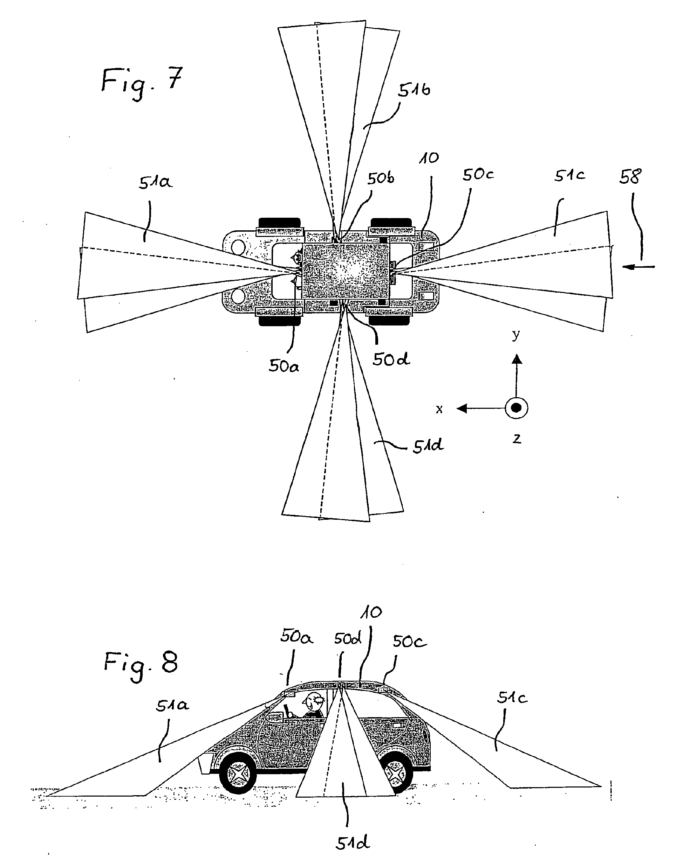

Figur 7 zeigt ein Kraftfahrzeug 10 eines weiteren Ausführungsbeispiels in Aufsicht, bestehend aus einer ersten Stereokamera 50a, einer zweiten Stereokamera 50b, einer dritten Stereokamera 50c und einer vierten Stereokamera 50d. Die erste Stereokamera 50a ist im Kraftfahrzeug 10 im Bereich des inneren Rückspiegels hinter der Windschutzscheibe angebracht. Die Blickrichtung 51a der ersten Stereokamera 50a ist in Fahrtrichtung 58 des Kraftfahrzeuges 10. Die dritte Stereokamera 50c ist im Bereich des Nummernschildes an der Heckklappe des Kraftfahrzeuges 10 angebracht. Die Blickrichtung 51c der dritten Stereokamera 50c ist entgegen der Fahrtrichtung 58 des Kraftfahrzeuges 10. Die zweite und vierte Stereokamera 50b, 50d sind im Bereich der B-Säule des Kraftfahrzeuges 10 derart angeordnet, dass deren Blickrichtungen 51b, 51d quer zur Fahrtrichtung des Kraftfahrzeuges links bzw. rechts ist. Ferner zeigt die Figur 7 das fahrzeugfeste kartesische Koordinatensystem mit den Achsen x, y, z, deren Nullpunkte jeweils in den Kameraobjektivmitten liegt. In diesem weiteren Ausführungsbeispiel wird die Dynamik (Bewegung), also insbesondere die dreidimensionalen Translations- und/oder die dreidimensionalen Rotations-Vektoren, des Kraftfahrzeugs 10, auch bodenkontakt-unabhängig, in Abhängigkeit der Bildinformationen der Stereokameras 50a, 50b, 50c, 50d gemessen. Für die dreidimensionale Erkennung der Fahrzeugbewegung sind mindestens eine in Fahrzeuglängs- und/oder eine in Fahrzeugquer-Richtung schauende Stereokamera erforderlich. In diesem weiteren Ausführungsbeispiel werden jedoch insgesamt vier Stereokameras 50a, 50b, 50c, 50d verwendet, die eine redundante Bestimmung der Bewegung des Kraftfahrzeuges ermöglichen. In diesem Ausführungsbeispiel werden die Stereokameras 50a, 50b, 50c, 50d neben der Bestimmung der Bewegung des Kraftfahrzeuges zur Bereitstellung oder Unterstützung von weiteren Funktionen im Zusammenhang mit der Möglichkeit der Erzeugung einer kompletten Rundumsicht eingesetzt, wie Precrash-Front-Erkennung und/oder Precrash-Seiten-Erkennung und/oder Precrash-Heckaufprall-Erkennung und/oder Diebstahlerkennung und/oder Vandalismus-Erkennung bei abgestelltem Kraftfahrzeug 10. Die Fahrzeuglängsgeschwindigkeitskomponente des Kraftfahrzeuges 10 wird in diesem Ausführungsbeispiel über den CAN-Bus oder über einen schnellen Sensorbus bereitgestellt. Ferner wird als Messwert die Quergeschwindigkeitskomponente verwendet, die durch das Integral eines Low-g-Querbeschleunigungssensors, wie er zur Fahrdynamikregelung eingesetzt wird, gebildet. Wie bereits im ersten Ausführungsbeispiel vorstehend beschrieben werden damit ortsfeste Bildpunkte erkannt und vor und seitlich des Kraftfahrzeuges 10 von bewegten Bildpunkten unterschieden, da letztere ihren Abstand zur Kamera mit einer Geschwindigkeit ändern, die nicht der verfügbaren Fahrzeuglängsgeschwindigkeitskomponente, bzw. seitlich nicht der Fahrzeugquergeschwindigkeitsquerkomponente entspricht. Für die Bestimmung der dreidimensionalen Fahrzeugbewegung werden in diesem Ausführungsbeispiel ortsfeste Bildpunkte verwendet, vorzugsweise ortsfeste Bildpunkte auf der Fahrbahnoberfläche. Nachfolgend werden die Bestimmung der dreidimensionalen Rotationsbewegung und der dreidimensionalen Translationsbewegung des Kraftfahrzeuges 10 ergänzend zu dem bereits erläuterten Verfahrens nach Figur 4 beschrieben.

Bestimmung des Rotations-Vektors und Rotations-Winkels um die z-Achse:
Man geht für die x-Richtung und für die y-Richtung von 2 jeweils fahrzeugfesten kartesischen Koordinatensystemen aus mit Nullpunkten jeweils in den Kameraobjektivmitten. Bei einer Gierbewegung des Kraftfahrzeuges 10 ändern sich die x-Komponenten der Abtastvektoren der ersten Stereokamera 50a von einem Abtastzeitpunkt zum nächsten messbar, betragsmäßig und in ungleicher Richtung bezogen auf die fahrzeugfesten Koordinatensysteme mit x-Richtung in Fahrzeuglängsachse. Die y-Komponenten ändern sich messbar und in gleicher Richtung. Aus der Änderungsrate der x- und y-Komponenten wird die Gierrate bestimmt und/oder aus der aufintegrierten Gierrate der Gierwinkel. Ferner wird auch mit der zweiten Stereokamera 50b die Gierrate des Kraftfahrzeuges 10 gemessen. Hier ist sie proportional zur Änderung der y-Komponenten der Abtastvektoren von einem Abtastzeitpunkt zum nächsten messbar und gleich. Die x-Komponenten ändern sich messbar und ungleich. Analoges gilt für die dritte und vierte Stereokamera 50c, 50d. Bei Messung mit 2 Stereokameras, beispielsweise mit der ersten Stereokamera 50a und der zweiten Stereokamera 50b hat man eine ausreichende Redundanz bezüglich der Messergebnisse.

Bestimmung des Rotations-Vektors und Rotations-Winkels um die x-Achse:
Bei einer Roll- bzw. Wank-Bewegung des Kraftfahrzeuges 10 ändern sich die z-Komponenten der Abtastvektoren der ersten Stereokamera 50a von einem Abtastzeitpunkt zum nächsten messbar, ungleich und entgegengesetzt bezogen auf die fahrzeugfesten Koordinatensysteme mit x-Richtung in Fahrzeuglängsachse. Die x-Komponenten ändern sich messbar und gleich. Aus der Änderungsrate der z- und x-Komponenten wird die Rollrate abgeleitet und/oder aus der aufintegrierten Rollrate der Rollwinkel. Für die weiteren Stereokameras 50b, 50c, 50d gilt analog das oben gesagte. Beispielsweise ändern sich für die zweite Stereokamera 50b die z-Komponenten messbar und gleich, die x-Komponenten ändern sich auch messbar und ungleich.

Bestimmung des Rotations-Vektors und Rotations-Winkels um die y-Achse:
Bei einer Nickbewegung des Kraftfahrzeuges 10 ändern sich die z-Komponenten der Abtastvektoren der ersten Stereokamera 50a von einem Abtastzeitpunkt zum nächsten messbar, gleich stark und in gleicher Richtung bezogen auf die fahrzeugfesten Koordinatensysteme mit x-Richtung in Fahrzeuglängsachse. Die x-Komponenten ändern sich auch messbar und gleich. Aus der Änderungsrate der z- und x-Komponenten wird die Nickrate abgeleiten, aus der aufintegrierten Nickrate der Nickwinkel. Für die weiteren Stereokameras 50b, 50c, 50d gilt analog das oben gesagte. Beispielsweise ändern sich für die zweite Stereokamera 50b die z-Komponenten messbar, ungleich und entgegengesetzt. Die x-Komponenten ändern sich messbar, ungleich stark und in gleicher Richtung (falrgeschwindigkeitsabhängig).

Bestimmung des Geschwindigkeitsvektors in x-Richtung:
Hier wird die Änderung einer x-Komponente von der ersten Stereokamera 50a und/oder der zweiten Stereokamera 50b gemessen und die Ergebnisse um die Einflüsse der Roll-, Nick- und Gierraten korrigiert. Entsprechendes gilt für die weiteren Stereokameras 50c, 50d. Mit zunehmender Geschwindigkeit werden diese Einflüsse immer kleiner und werden in einer Näherungsberechnung vernachlässigt. Aus der aufintegrierten x-Geschwindigkeit wird der zurückgelegte Weg in x-Richtung bestimmt.

Bestimmung des Geschwindigkeitsvektors in y-Richtung:
Hier wird die Änderung einer y-Komponente von der ersten Stereokamera 50a und/oder der zweiten Stereokamera 50b gemessen und die Ergebnisse um die Einflüsse der Roll-, Nick- und Gierraten korrigiert. Entsprechendes gilt für die weiteren Stereokameras 50c, 50d. Diese Einflüsse können hier relativ groß sein, auf jeden Fall größer als bei der x-Geschwindigkeit. Aus der aufintegrierten y-Geschwindigkeit wird der zurückgelegte Weg in y-Richtung bestimmt.

Bestimmung des Geschwindigkeitsvektors in z-Richtung:
Hier wird die Änderung einer z-Komponente der ersten Stereokamera 50a und/oder der zweiten Stereokamera 50b gemessen und die Ergebnisse um die Einflüsse der Roll-, Nick- und Gierraten korrigiert. Entsprechendes gilt für die weiteren Stereokameras 50c, 50d. Diese Einflüsse können hier relativ groß sein, auf jeden Fall größer als bei der x-Geschwindigkeit. Aus der aufintegrierten z-Geschwindigkeit wird der zurückgelegte Weg in z-Richtung bestimmt.

Figur 8 zeigt das Kraftfahrzeug 10 nach Figur 7 des weiteren Ausführungsbeispiels in Seitenansicht. Neben der ersten Stereokamera 50a mit der Blickrichtung 51a in Fahrtrichtung des Kraftfahrzeuges und der dritten Stereokamera 50c mit der Blickrichtung 51c entgegen der Fahrtrichtung des Kraftfahrzeuges ist die vierte Stereokamera 50d mit der Blickrichtung 51d seitlich zum Kraftfahrzeuges 10, also quer zur Fahrtrichtung des Kraftfahrzeuges 10, eingezeichnet.

Wie vorstehend ausgeführt sind die beschriebenen Verfahren und die Vorrichtungen zur Fahrdynamikregelung und/oder zur Bestimmung der Bewegung eines Kraftfahrzeuges nicht auf eine einzelne Stereokamera beschränkt, die in Fahrtrichtung des Kraftfahrzeuges ausgerichtet ist. Vielmehr ist die Verwendung wenigstens eines Bildsensorsystems möglich, wobei wenigstens zwei Bildsensoren vorgesehen sind, die im wesentlichen die selbe Szene aufnehmen. Bei mehr als zwei Bildsensoren wird die Genauigkeit des Verfahrens erhöht. Neben dem Einbau der Stereokamera und/oder des Bildsensorsystems mit wenigstens zwei Bildsensoren in Fahrtrichtung des Kraftfahrzeuges sind alternative Einbaumöglichkeiten denkbar. Beispielsweise ist der Einbau entgegen der Fahrtrichtung und/oder zur Seite möglich.

In einer weiteren Variante des beschriebenen Verfahrens, der Vorrichtung und der Sensoreinheit werden neben den CCD-Bildsensoren und/oder den CMOS-Bildsensoren alternativ oder zusätzlich andere Bildsensoren verwendet, die Bildinformationen erzeugen, beispielsweise Zeilensensoren. Bildinformationen sind dabei Informationen die in elektromagnetischer Strahlung im Ultraviolettenstrahlungsbereich, im Infrarotenstrahlungsbereich und/oder im sichtbaren Strahlungsbereich des elektromagnetischen Strahlungsspektrums enthalten sind. Als Bildinformationen werden insbesondere die Intensität und/oder die Wellenlänge und/oder die Frequenz und/oder die Polarisation verwendet.

In einer Variante des beschriebenen Verfahrens und der Vorrichtung wird aus den erzeugten Bildinformationen wenigstens ein Rotationsvektor und/oder wenigstens ein Bewegungsvektor des Kraftfahrzeuges bestimmt. Ein Rotationsvektor ist ein Drehvektor des Kraftfahrzeuges um eine beliebige Achse, wobei vorzugsweise Rotationsvektoren in eine Hauptachse des Kraftfahrzeuges bestimmt werden. Die Hauptachsen des Kraftfahrzeuges sind die Hochachse, die Querachse und die Längsachse. Ein Bewegungsvektor des Kraftfahrzeuges ist ein Vektor der Bewegung des Schwerpunktes des Kraftfahrzeuges in eine beliebige Richtung. Es werden vorzugsweise Bewegungsvektoren in eine Hauptachse des Kraftfahrzeuges bestimmt. Dabei wird dies Gierbeschleunigung und/oder die Nickbeschleunigung und/oder die Wankbeschleunigung und/oder Giergeschwindigkeit und/oder die Nickgeschwindigkeit und/oder die Wankgeschwindigkeit und/oder der Gierwinkel und/oder der Nickwinkel und/oder der Wankwinkel und/oder die Querbeschleunigung und/oder die Längsbeschleunigung und/oder die Vertikalbeschleunigung und/oder die Quergeschwindigkeit und/oder die Längsgeschwindigkeit und/oder die Vertikalgeschwindigkeit und/oder den Querweg und/oder den Längsweg und/oder den Vertikalweg des Kraftfahrzeuges bestimmt. Der Begriff "Nick" bezeichnet einen Rotationsvektor um die Querachse des Kraftfahrzeuges, also senkrecht zur Hochachse und zur Längsachse. Beispielsweise ist die Nickbeschleunigung die Rotationsbeschleunigung des Kraftfahrzeuges in Richtung der Querachse des Kraftfahrzeuges. Dagegen bezeichnet der Begriff Wank einen Rotationsvektor um die Längsachse des Kraftfahrzeuges. Beispielsweise ist die Wankbeschleunigung die Rotationsbeschleunigung des Kraftfahrzeuges in Richtung der Längsachse des Kraftfahrzeuges. Weiter bezeichnet der Begriff "Vertikal" einen Bewegungsvektor in Richtung der Hochachse des Kraftfahrzeuges, während die Begriffe "Längs" und "Quer" einen Bewegungsvektor in Richtung der Längsachse und der Querachse beschreiben. In einer weiteren vorteilhaften Variante des beschriebenen Verfahrens und der Vorrichtung werden alle drei beschriebenen Bewegungsvektoren in den drei Hauptachsen des Kraftfahrzeuges mit den zugehörigen Rotationsvektoren um dieselben bestimmt. Dabei wird die Fahrzeugbewegung dreidimensional erkannt und modelliert.

In einer weiteren Variante des beschriebenen Verfahrens und der Vorrichtung werden wenigstens zwei Bildsensorsysteme mit wenigstens zwei Bildsensoren verwendet, die im wesentlichen die selbe Szene aufnehmen, insbesondere wenigstens zwei Stereokameras. Dies ermöglicht eine Redundanzfunktion und/oder eine Plausibilitätsfunktion des vorstehend beschriebenen Verfahrens. Mittels der Redundanzfunktion wird wenigstens ein Rotationsvektor und/oder wenigstens ein Bewegungsvektor unabhängig von beiden Bildsensorsystemen bestimmt und durch Mittelwertbildung der Messwert ermittelt. Plausibilitätsfunktion ermöglicht die Überprüfung der Messwerte der beiden Bildsensorsysteme, indem die Messwerte verglichen werden.

In einer Variante des beschriebenen Verfahrens und der Vorrichtung werden als Sensoren neben dem wenigstens einen Bildsensorsystem wenigstens ein Giergeschwindigkeitssensor und/oder wenigstens ein Querbeschleunigungssensor zur Fahrdynamikregelung verwendet. In dieser vorteilhaften Variante wird das Bildsensorsystem zur Plausibilitätsprüfung eingesetzt. Die Messwerte des Giergeschwindigkeitssensors und/oder des Querbeschleunigungssensors werden mit dem von dem Bildsensorsystem bestimmten wenigstens einen Messwert verglichen. Alternativ oder zusätzlich wird das Bildsensorsystem zur redundanten Bestimmung von wenigstens einem Messwert eingesetzt. Dies geschieht durch Mittelwertbildung des wenigstens einen Messwertes des Bildsensorsystems mit wenigstens einem Messwert des Giergeschwindigkeitssensors und/oder wenigstens einem Messwert des Querbeschleunigungssensors. Giergeschwindigkeitssensoren sind Sensoren zur Messung der Giergeschwindigkeit eines Kraftfahrzeuges. Querbeschleunigungssensoren sind Trägheitssensoren zur Bestimmung der Querbeschleunigung eines Kraftfahrzeuges.

Eine weitere Variante der vorstehend beschriebenen Verfahren sieht vor, dass zur Stromverbrauchseinsparung das wenigstens eine Bildsensorsystem bei definierten Betriebssituationen, wie abgestelltes Fahrzeug, in einen Stand-by-Betrieb überführt wird und in Abhängigkeit wenigstens eines Signals eines weiteren Sensors, der die unmittelbare Fahrzeugumgebung überwacht, in Betriebsbereitschaft gesetzt wird, also "aufgeweckt" wird. Als Sensoren zur Überwachung der Fahrzeugumgebung werden Beschleunigungssensoren und/oder elektrische Feldsensoren eingesetzt. Mit den elektrischen Feldsensoren können die durch eine oder mehrere in unmittelbarer Sensornähe befindlichen Personen verursachten Änderungen der dielektrischen Verlustwiderstände bei einer geeigneten Messfrequenz, z.B. 500 kHz, die sich um > 20 % ändern, da Personen > 60 % Wasser enthalten, erkannt werden. So kann spezifisch die Proximität unerwünschter Lebewesen, d.h. Personen, detektiert werden. Die Identität erwünschter Personen, beispielsweise des Fahrzeugbesitzers, wird wie beim schlüssellosen Zugangssystem (Keyless Entry System) durch die in ihren Zündschlüsseln enthaltenen Transpondern erkannt, die Bildsensorsysteme bleiben dann inaktiv, da eine Überwachung der Fahrzeugumgebung nicht notwendig ist.

## Patentansprüche

1. Verfahren zur Fahrdynamikregelung in einem Kraftfahrzeug (10),
- wobei wenigstens ein Sensor (12) wenigstens einen Messwert erfasst,
- wobei in Abhängigkeit von dem wenigstens einen Messwert wenigstens ein Aktor (14) zur Fahrdynamikregelung angesteuert wird,
- wobei zur Fahrdynamikregelung wenigstens ein Bildsensorsystem Bildinformationen von der Kraftfahrzeugumgebung erzeugt, wobei wenigstens zwei Bildsensoren vorgesehen sind, die im wesentlichen dieselbe Szene aufnehmen, insbesondere wobei das Bildsensorsystem wenigstens eine Stereokamera (50) ist,
**dadurch gekennzeichnet, dass**
- aus den erzeugten Bildinformationen wenigstens ein ortsfester Bildpunkt (60, 62) bestimmt wird, indem zwischen beweglichen und ortsfesten Bildpunkten (60, 62) unterschieden wird,
- die Bildkoordinaten des selben wenigstens einen ortsfesten Bildpunktes (60, 62) in wenigstens zwei, vorzugsweise aufeinanderfolgenden, Bildern einer Bildsequenz ermittelt werden,
- aus den ermittelten Bildkoordinaten der wenigstens eine Messwert bestimmt wird, wobei der Messwert zur Fahrdynamikregelung verwendet wird.

2. Verfahren nach einem der vorhergehenden Ansprüche, **dadurch gekennzeichnet, dass** aus den erzeugten Bildinformationen als Messwert wenigstens ein Rotationsvektor des Kraftfahrzeuges (10) und/oder wenigstens ein Bewegungsvektor des Kraftfahrzeuges (10) bestimmt wird.

3. Verfahren nach einem der vorhergehenden Ansprüche, **dadurch gekennzeichnet, dass** aus den erzeugten Bildinformationen als Messwert die Giergeschwindigkeit und/oder der Gierwinkel und/oder die Querbeschleunigung des Kraftfahrzeuges (10) bestimmt wird.

4. Verfahren nach Anspruch 1, **dadurch gekennzeichnet, dass** die dreidimensionale Rotationsbewegung und/oder die dreidimensionale Translationsbewegung des Kraftfahrzeuges (10) in Abhängigkeit von Bildinformationen von der Kraftfahrzeugumgebung bestimmt wird.

5. Verfahren nach einem der vorhergehenden Ansprüche **dadurch gekennzeichnet, dass** eine Blickrichtung des wenigstens einen ersten Bildsensorsystems in Fahrtrichtung und/oder entgegen der Fahrtrichtung ist, und/oder eine Blickrichtung des wenigstens einen zweiten Bildsensorsystems quer zur Fahrtrichtung ist.

6. Vorrichtung zur Fahrdynamikregelung in einem Kraftfahrzeug (10) mit wenigstens einem Sensor (12) zur Erfassung wenigstens eines Messwertes und wenigstens einem Aktor (14), der durch eine Steuereinheit (34) in Abhängigkeit von dem wenigstens einen Messwert zur Fahrdynamikregelung angesteuert wird, wobei wenigstens ein Sensor (12) als Bildsensorsystem konfiguriert ist, wobei wenigstens zwei Bildsensoren vorgesehen sind, die im wesentlichen dieselbe Szene aufnehmen, insbesondere wobei das Bildsensorsystem wenigstens eine Stereokamera (50) ist, wobei das Bildsensorsystem Bildinformationen von der Kraftfahrzeugumgebung erzeugt,
**dadurch gekennzeichnet, dass**
- die Steuereinheit (34) Mittel zur Bestimmung von ortsfesten Bildpunkten hat, wobei die Mittel zur Bestimmung von ortsfesten Bildpunkten derart ausgebildet sind, dass aus den erzeugten Bildinformationen ortsfeste Bildpunkte (60, 62) bestimmt werden, indem zwischen beweglichen und ortsfesten Bildpunkten (60, 62) unterschieden wird,
- die Steuereinheit (34) Mittel zur Ermittlung der Bildkoordinaten aufweist, wobei die Mittel zur Ermittlung der Bildkoordinaten derart ausgebildet sind, dass die Bildkoordinaten des selben wenigstens einen ortsfesten Bildpunktes (60, 62) in wenigstens zwei, vorzugsweise aufeinanderfolgenden, Bildern einer Bildsequenz ermittelt werden,
- in der Steuereinheit (34) Mittel zur Bestimmung des Messwertes vorgesehen sind, wobei die Mittel zur Bestimmung des Messwertes derart ausgebildet sind, dass aus den ermittelten Bildkoordinaten der Messwert bestimmt wird, wobei der Messwert zur Fahrdynamikregelung verwendet wird.

7. Vorrichtung nach Anspruch 6, **dadurch gekennzeichnet, dass**, die Steuereinheit (34) Mittel zur Bestimmung wenigstens eines Rotationsvektors des Kraftfahrzeuges (10) und/oder wenigstens eines Bewegungsvektors des Kraftfahrzeuges (10) aus den erzeugten Bildinformationen aufweist.

8. Vorrichtung nach einem der Ansprüche 6 bis 7, **dadurch gekennzeichnet, dass** die Steuereinheit (34) Mittel zur Bestimmung der Giergeschwindigkeit und/oder des Gierwinkels und/oder der Querbeschleunigung des Kraftfahrzeuges (10) aus den erzeugten Bildinformationen aufweist.

9. Steuereinheit (34) zur Fahrdynamikregelung in einem Kraftfahrzeug (10),
- mit Mitteln, die wenigstens einen Messwert, der von wenigstens einem Sensor (12) erfasst wird, wobei der Messwert zur Fahrdynamikregelung verwendet wird, verarbeiten,
- mit Mitteln, die wenigstens einen Aktor (14) zur Fahrdynamikregelung steuern,
- wobei Mittel vorgesehen sind, die Bildinformationen wenigstens eines Bildsensorsystems verarbeiten, insbesondere wenigstens einer Stereokamera (50), wobei das Bildsensorsystem wenigstens zwei Bildsensoren umfasst, die im wesentlichen dieselbe Szene aufnehmen,
**dadurch gekennzeichnet, dass**
- die Steuereinheit (34) Mittel zur Bestimmung von ortsfesten Bildpunkten hat, wobei die Mittel zur Bestimmung von ortsfesten Bildpunkten derart ausgebildet sind, dass aus den erzeugten Bildinformationen ortsfeste Bildpunkte (60, 62) bestimmt werden, indem zwischen beweglichen und ortsfesten Bildpunkten (60, 62) unterschieden wird,
- die Steuereinheit (34) Mittel zur Ermittlung der Bildkoordinaten aufweist, wobei die Mittel zur Ermittlung der Bildkoordinaten derart ausgebildet sind, dass die Bildkoordinaten des selben wenigstens einen ortsfesten Bildpunktes (60, 62) in wenigstens zwei, vorzugsweise aufeinanderfolgenden, Bildern einer Bildsequenz ermittelt werden,
- in der Steuereinheit (34) Mittel zur Bestimmung des Messwertes vorgesehen sind, wobei die Mittel zur Bestimmung des Messwertes derart ausgebildet sind, dass aus den ermittelten Bildkoordinaten der Messwert bestimmt wird, wobei der Messwert zur Fahrdynamikregelung verwendet wird.

10. Steuereinheit (34) nach Ansprüch 9 **dadurch gekennzeichnet, dass** die Steuereinheit (34) Mittel zur Bestimmung wenigstens eines Rotationsvektors des Kraftfahrzeuges (10), insbesondere der Giergeschwindigkeit und/oder des Gierwinkels, und/oder wenigstens eines Bewegungsvektors des Kraftfahrzeuges (10), insbesondere die Querbeschleunigung, aus den erzeugten Bildinformationen aufweist.

11. Computerprogramm mit Programmcode-Mitteln, um alle Schritte von jedem beliebigen der Ansprüche 1 bits 5 durchzuführen, wenn das Programm auf einem Computer ausgeführt wird.

## Claims

1. Method for controlling the vehicle movement dynamics in a motor vehicle (10),
- wherein at least one sensor (12) acquires at least one measured value,
- wherein at least one actuator (14) for controlling the vehicle movement dynamics is actuated as a function of the at least one measured value,
- wherein in order to control the vehicle movement dynamics at least one image sensor system generates image information about the surroundings of the motor vehicle, wherein at least two image sensors are provided which capture essentially the same scene, in particular wherein the image sensor system is at least one stereo camera (50),
**characterized in that**
- at least one positionally fixed pixel (60, 62) is determined from the generated image information by differentiating between mobile and positionally fixed pixels (60, 62),
- the image co-ordinates of the same at least one positionally fixed pixel (60, 62) are acquired in at least two, preferably successive, images of an image sequence, and
- the at least one measured value is determined from the acquired image co-ordinates, wherein the measured value is used for vehicle movement dynamics control.

2. Method according to one of the preceding claims, **characterized in that** at least one rotation vector of the motor vehicle (10) and/or at least one movement vector of the motor vehicle (10) are/is determined from the generated image information as a measured value.

3. Method according to one of the preceding claims, **characterized in that** the yaw rate and/or the yaw angle and/or the lateral acceleration of the motor vehicle (10) are/is determined from the generated image information as a measured value.

4. Method according to Claim 1, **characterized in that** the three-dimensional rotational movement and/or the three-dimensional translation movement of the motor vehicle (10) are/is determined as a function of image information about the surroundings of the motor vehicle.

5. Method according to one of the preceding claims, **characterized in that** a viewing direction of the at least one first image sensor system is in the travel direction and/or counter to the travel direction, and/or a viewing direction of the at least one second image sensor system is transverse with respect to the travel direction.

6. Device for controlling the vehicle movement dynamics in a motor vehicle (10) having at least one sensor (12) for acquiring at least one measured value and at least one actuator (14) which is actuated by a control unit (34) as a function of the at least one measured value for the purpose of vehicle movement dynamics control, wherein at least one sensor (12) is configured as an image sensor system, wherein at least two image sensors are provided which capture essentially the same scene, in particular wherein the image sensor system is at least one stereo camera (50), wherein the image sensor system generates image information about the surroundings of the motor vehicle,
**characterized in that**
- the control unit (34) has means for determining positionally fixed pixels,
wherein the means for determining positionally fixed pixels are embodied in such a way that positionally fixed pixels (60, 62) are determined from the generated image information by differentiating between mobile and positionally fixed pixels (60, 62),
- the control unit (34) has means for acquiring the image co-ordinates, wherein the means for acquiring the image co-ordinates are embodied in such a way that the image co-ordinates of the same at least one positionally fixed pixel (60, 62) are acquired in at least two, preferably successive, images of an image sequence, and
- means for determining the measured value are provided in the control unit (34), wherein the means for determining the measured value are embodied in such a way that the measured value is determined from the acquired image co-ordinates, wherein the measured value is used for controlling the vehicle movement dynamics.

7. Device according to Claim 6, **characterized in that** the control unit (34) has means for determining at least one rotational vector of the motor vehicle (10) and/or at least one movement vector of the motor vehicle (10) from the generated image information.

8. Device according to one of Claims 6 and 7, **characterized in that** the control unit (34) has means for determining the yaw rate and/or the yaw angle and/or the lateral acceleration of the motor vehicle (10) from the generated image information.

9. Control unit (34) for controlling the vehicle movement dynamics in a motor vehicle (10),
- having means which process at least one measured value which is acquired by at least one sensor (12), wherein the measured value is used for controlling the vehicle movement dynamics,
- having means which control at least one actuator (14) for controlling the vehicle movement dynamics,
- wherein means are provided which process the image information of at least one image sensor system, in particular of at least one stereo camera (50), wherein the image sensor system comprises at least two image sensors which capture essentially the same scene, **characterized in that**
- the control unit (34) has means for determining the positionally fixed pixels, wherein the means for determining positionally fixed pixels are embodied in such a way that positionally fixed pixels (60, 62) are determined from the generated image information by differentiating between mobile and positionally fixed pixels (60, 62),
- the control unit (34) has means for acquiring the image co-ordinates, wherein the means for acquiring the image co-ordinates are embodied in such a way that the image co-ordinates of the same at least one positionally fixed pixel (60, 62) are acquired in at least two, preferably successive, images of an image sequence, and
- means for determining the measured value are provided in the control unit (34), wherein the means for determining the measured value are embodied in such a way that the measured value is determined from the acquired image co-ordinates, wherein the measured value is used for controlling the vehicle movement dynamics.

10. Control unit (34) according to Claim 9, **characterized in that** the control unit (34) has means for determining at least one rotational vector of the motor vehicle (10), in particular the yaw rate and/or the yaw angle, and/or at least one movement vector of the motor vehicle (10), in particular the lateral acceleration, from the generated image information.

11. Computer program having a program code means for carrying out all the steps of any of Claims 1 to 5 when the program is run on a computer.

## Revendications

1. Procédé de régulation de la dynamique de roulage d'un véhicule automobile (10), dans lequel
- au moins un détecteur (12) saisit au moins une valeur de mesure,
- au moins un actionneur (14) pour réguler la dynamique de roulage est commandé en fonction de la ou des valeurs de mesure,
- au moins un système de détecteurs d'image produit des informations d'image de l'environnement du véhicule automobile pour réguler la dynamique de roulage,
au moins deux détecteurs d'image qui enregistrent essentiellement la même scène étant prévus, le système de détecteurs d'image étant en particulier au moins une caméra stéréo (50),
**caractérisé en ce que**
- à partir des informations d'image produites, au moins un point d'image fixe (60, 62) est défini en distinguant entre des points d'image mobiles et des points d'image fixes (60, 62),
- les coordonnées d'images du même ou des mêmes points d'image fixes (60, 62) sont déterminées dans au moins deux images, de préférence successives, d'une séquence d'images,
- la ou les valeurs de mesure sont déterminées à partir des coordonnées d'image ainsi déterminées,
la valeur de mesure étant utilisée pour la régulation de la dynamique de roulage.

2. Procédé selon l'une des revendications précédentes, **caractérisé en ce qu'**au moins un vecteur de rotation du véhicule automobile (10) et/ou au moins un vecteur de déplacement du véhicule automobile (10) sont déterminés en tant que valeurs de mesure à partir des informations d'image produites.

3. Procédé selon l'une des revendications précédentes, **caractérisé en ce que** la vitesse de lacet et/ou l'angle de lacet et/ou l'accélération transversale du véhicule automobile (10) sont déterminés comme valeurs de mesure à partir des informations d'image produites.

4. Procédé selon la revendication 1, **caractérisé en ce que** le déplacement de rotation tridimensionnel et/ou le déplacement de translation tridimensionnel du véhicule automobile (10) sont déterminés à partir d'informations d'image concernant l'environnement du véhicule automobile.

5. Procédé selon l'une des revendications précédentes, **caractérisé en ce qu'**une direction d'observation du ou des systèmes de détecteurs d'image est la direction d'avancement et/ou la direction opposée à la direction d'avancement et/ou **en ce qu'**une direction d'observation du ou des deuxièmes systèmes de détecteurs d'image est une direction transversale par rapport à la direction d'avancement.

6. Dispositif de régulation de la dynamique de roulage d'un véhicule automobile (10),
le dispositif présentant au moins un détecteur (12) qui saisit au moins une valeur de mesure et au moins un actionneur (14) qui est commandé par une unité de commande (34) en fonction de la ou des valeurs de mesure en vue de réguler la dynamique de roulage,
au moins un détecteur (12) étant configuré comme système de détecteurs d'image, au moins deux détecteurs d'image étant prévus et enregistrant essentiellement la même scène, le système de détecteurs d'image étant en particulier au moins une caméra stéréo (50), le système de détecteurs d'image produisant des informations d'image concernant l'environnement du véhicule automobile,
**caractérisé en ce que**
- l'unité de commande (34) présente des moyens de détermination de points d'image fixes, les moyens de détermination de points d'image fixes étant configurés de telle manière que des points d'image fixes (60, 62) sont déterminés à partir des informations d'image produites en distinguant entre des points d'image mobiles et des points d'image fixes (60, 62),
- l'unité de commande (34) présente des moyens de détermination des coordonnées d'image, les moyens de détermination des coordonnées d'image étant configurés de telle sorte que les coordonnées d'image du même ou des mêmes points d'image fixes (60, 62) sont déterminées dans au moins deux images, de préférence successives, d'une séquence d'images, et
- l'unité de commande (34) présente des moyens de détermination de la valeur de mesure, les moyens de détermination de la valeur de mesure étant configurés de telle manière que la valeur de mesure est déterminée à partir des coordonnées d'image qui ont été déterminées, la valeur de mesure étant utilisée pour réguler la dynamique de roulage.

7. Dispositif selon la revendication 6, **caractérisé en ce que** l'unité de commande (34) présente des moyens de détermination d'au moins un vecteur de rotation du véhicule automobile (10) et/ou d'au moins un vecteur de déplacement du véhicule automobile (10) à partir des informations d'image produites.

8. Dispositif selon l'une des revendications 6 et 7, **caractérisé en ce que** l'unité de commande (34) présente des moyens de détermination de la vitesse de lacet et/ou de l'angle de lacet et/ou de l'accélération transversale du véhicule automobile (10) à partir des informations d'image produites.

9. Unité de commande (34) pour réguler la dynamique de roulage d'un véhicule automobile (10), qui présente
- des moyens qui traitent au moins une valeur de mesure saisie par au moins un détecteur (12), la valeur de mesure étant utilisée pour réguler la dynamique de roulage,
- des moyens qui commandent au moins un actionneur (14) pour réguler la dynamique de roulage,
- des moyens étant prévus pour traiter les informations d'image d'au moins un système de détecteurs d'image, en particulier d'au moins une caméra stéréo (50), le système de détecteurs d'image comprenant au moins deux détecteurs d'image qui enregistrent essentiellement la même scène, **caractérisée en ce que**
- l'unité de commande (34) possède des moyens de détermination de points d'image fixes, les moyens de détermination de points d'image fixes étant configurés de telle manière que des points d'image fixes (60, 62) sont déterminés à partir des informations d'image produites en distinguant entre des points d'image mobiles et des points d'image fixes (60, 62),
- l'unité de commande (34) présente des moyens de détermination des coordonnées d'image, les moyens de détermination des coordonnées d'image étant configurés de telle manière que les coordonnées d'image du même ou des mêmes points d'image fixes (60, 62) sont déterminés dans au moins deux images, de préférence successives, d'une séquence d'images, et
- des moyens de détermination de la valeur de mesure sont prévus dans l'unité de commande (34), les moyens de détermination de la valeur de mesure étant configurés de manière à déterminer la valeur de mesure à partir des coordonnées d'image qui ont été déterminées, la valeur de mesure étant utilisée pour réguler la dynamique de roulage.

10. Unité de commande (34) selon la revendication 9, **caractérisée en ce que** l'unité de commande (34) présente des moyens de détermination d'au moins un vecteur de rotation du véhicule automobile (10), en particulier de la vitesse de lacet et/ou de l'angle de lacet, et/ou d'au moins un vecteur de déplacement du véhicule automobile (10), en particulier de son accélération transversale, à partir des informations d'image produites.

11. Programme informatique doté de moyens de code de programme qui permettent d'exécuter toutes les étapes d'une quelconque des revendications 1 à 5 lorsque le programme est exécuté sur un ordinateur.
